(19) Europäisches Patentamt
European Patent Office
Office européen des brevets

(11) **EP 2 694 188 B1**

(12) **FASCICULE DE BREVET EUROPEEN**

(45) Date de publication et mention de la délivrance du brevet:
**21.06.2017 Bulletin 2017/25**

(21) Numéro de dépôt: **12713228.0**

(22) Date de dépôt: **13.03.2012**

(51) Int Cl.:
**B01D 53/047** (2006.01)    **C09K 5/06** (2006.01)

(86) Numéro de dépôt international:
**PCT/FR2012/050515**

(87) Numéro de publication internationale:
**WO 2012/136913 (11.10.2012 Gazette 2012/41)**

(54) **MÉLANGE D'UN ADSORBANT ET D'UN MATÉRIAU À CHANGEMENT DE PHASE À DENSITÉ ADAPTÉE**

MISCHUNG AUS EINEM ADSORBENS UND SPEICHERSTOFF MIT ANGEPASSTER DICHTE

MIXTURE OF AN ADSORBENT AND A PHASE CHANGE MATERIAL WITH AN ADAPTED DENSITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2011 FR 1153060**
**08.04.2011 FR 1153061**

(43) Date de publication de la demande:
**12.02.2014 Bulletin 2014/07**

(73) Titulaire: **L'Air Liquide Société Anonyme pour l'Etude et l'Exploitation des Procédés Georges Claude**
**75007 Paris (FR)**

(72) Inventeurs:
• **GUERET, Vincent**
**310000 HANGZHOU (CN)**
• **MONEREAU, Christian**
**F-34000 Montpellier (FR)**
• **PULLUMBI, Pluton**
**F-78000 Versailles (FR)**

(74) Mandataire: **Beroud, Amandine**
**L'AIR LIQUIDE S.A.**
**Direction de la Propriété Intellectuelle**
**75 Quai d'Orsay**
**75321 Paris Cedex 07 (FR)**

(56) Documents cités:
**CN-A- 101 836 915    FR-A1- 2 809 115**
**FR-A1- 2 891 159    FR-A1- 2 906 160**
**FR-A1- 2 936 168**

## Description

L'invention concerne un mélange en toute proportion de particules d'adsorbant et de particules - ou agglomérats- contenant des matériaux à changement de phase (MCP) utilisable dans un procédé thermo cyclique à temps de cycle court, typiquement un temps de cycle inférieur à 30 minutes, notamment un procédé d'adsorption à pression modulée de type PSA (Pressure Swing Adsorption) de manière à diminuer les effets thermiques que subit ledit procédé thermo cyclique à chaque cycle.

On appelle « procédé thermo-cyclique », tout procédé cyclique au cours duquel certaines étapes sont exothermiques, c'est-à-dire s'accompagnant d'un dégagement de chaleur, alors que certaines autres étapes sont endothermiques, c'est-à-dire s'accompagnant d'une consommation de chaleur.

Des exemples typiques de procédés thermo-cycliques selon la présente invention incluent les procédés de séparation de gaz par adsorption modulée en pression, et- tout procédé mettant en oeuvre une conversion chimique couplée à des cycles d'adsorption modulée en pression, tels que mentionnés ci-dessus, permettant de déplacer l'équilibre des réactions chimiques.

Dans le cadre de la présente invention, on désigne, sauf stipulation autre, par les termes « procédé PSA », tout procédé de séparation de gaz par adsorption modulée en pression, mettant en oeuvre une variation cyclique de la pression entre une pression haute, dite pression d'adsorption, et une pression basse, dite pression de régénération. Par conséquent, l'appellation générique procédé PSA est employée indifféremment pour désigner les procédés cycliques suivants :

- les procédés VSA dans lesquels l'adsorption s'effectue sensiblement à la pression atmosphérique, dite « pression haute », c'est-à-dire entre 1 bara et 1,6 bara (bara = bar absolu), préférentiellement entre 1,1 et 1,5 bara, et la pression de désorption, dite « pression basse », est inférieure à la pression atmosphérique, typiquement entre 30 et 800 mbara, de préférence entre 100 et 600 mbara.
- les procédés VPSA ou MPSA dans lesquels l'adsorption s'effectue à une pression haute sensiblement supérieure à la pression atmosphérique, généralement entre 1,6 et 8 bara, préférentiellement entre 2 et 6 bara, et la pression basse est inférieure à la pression atmosphérique, typiquement entre 30 et 800 mbara, de préférence entre 100 et 600 mbara.
- les procédés PSA dans lesquels l'adsorption s'effectue à une pression haute nettement supérieure à la pression atmosphérique, typiquement entre 1,6 et 50 bara, préférentiellement entre 2 et 35 bara, et la pression basse est supérieure ou sensiblement égale à la pression atmosphérique, donc entre 1 et 9 bara, de préférence entre 1,2 et 2,5 bara.

On parlera par la suite de « procédé RPSA » pour désigner des procédés PSA de cycle très rapide, en général inférieur à la minute.

De manière générale, un procédé PSA permet de séparer une ou plusieurs molécules de gaz d'un mélange gazeux les contenant, en exploitant la différence d'affinité d'un adsorbant donné ou, le cas échéant, de plusieurs adsorbants pour ces différentes molécules de gaz.

L'affinité d'un adsorbant pour une molécule gazeuse dépend de la structure et de la composition de l'adsorbant, ainsi que des propriétés de la molécule, notamment sa taille, sa structure électronique et ses moments multipolaires.

Un adsorbant peut être par exemple une zéolite, un charbon actif, une alumine activée, un gel de silice, un tamis moléculaire carboné ou non, une structure métallo-organique, un ou des oxydes ou des hydroxydes de métaux alcalins ou alcalino-terreux, ou une structure poreuse contenant une substance capable de réagir réversiblement avec une ou plusieurs molécules de gaz, telle que amines, solvants physiques, complexants métalliques, oxydes ou hydroxydes métalliques par exemple

L'adsorption est un phénomène exothermique, chaque couple molécule-adsorbant étant caractérisé par une enthalpie iso stérique d'adsorption ou une enthalpie de réaction en général. Symétriquement, la désorption est endothermique.

Par ailleurs, un procédé PSA est un procédé cyclique comprenant plusieurs étapes séquentielles d'adsorption et de désorption.

Par conséquent, certaines étapes du cycle d'un PSA sont exothermiques, notamment l'étape d'adsorption des molécules de gaz adsorbées sur l'adsorbant, alors que d'autres étapes sont endothermiques, notamment l'étape de régénération ou désorption des molécules adsorbées sur l'adsorbant.

Les effets thermiques qui résultent de l'enthalpie d'adsorption ou de l'enthalpie de réaction conduisent, d'une manière générale, à la propagation, à chaque cycle, d'une onde de chaleur à l'adsorption limitant les capacités d'adsorption et d'une onde de froid à la désorption limitant la désorption.

Ce phénomène cyclique local de battements en température a un impact non négligeable sur les performances de séparation du procédé, telles que la productivité, le rendement de séparation et l'énergie spécifique de séparation, comme le rappelle le document EP-A-1188470.

Ainsi, il a été montré que si les battements thermiques dus à l'enthalpie d'adsorption étaient totalement éradiqués, la productivité de certains PSA 02 industriels actuels serait améliorée de l'ordre de 50% et le rendement en oxygène serait amélioré de 10%. De même pour les autres types de PSA, l'atténuation des battements thermiques entraînerait une amélioration notable des performances de séparation.

Ce phénomène négatif ayant été identifié, plusieurs solutions ont déjà été décrites pour tenter de le diminuer ou de le supprimer.

Ainsi, il a été proposé d'augmenter la capacité calorifique du milieu adsorbant par addition de liant inerte, lors de la fabrication des particules, par dépôt du milieu adsorbant sur un noyau inerte, par adjonction de particules identiques à l'adsorbant mais inertes. Par exemple, dans le cas d'un procédé PSA O2, il a déjà été testé de réaliser l'adsorption de l'azote contenu dans l'air sur un lit composite constitué de zéolites 5A et 3A ne se différentiant que par la taille de leurs pores : seuls ceux de la zéolite 5A permettent l'adsorption d'azote, puisque ceux de la zéolite 3A sont de dimension trop faible.

Par ailleurs, il a été également décrit l'utilisation de moyens extérieurs de chauffage et/ou de refroidissement pour contre-balancer les effets thermiques de la désorption ou de l'adsorption, tels que l'utilisation d'échangeurs thermiques.

Des couplages thermiques entre phase d'adsorption et phase de régénération ont également été proposés, l'adsorbant étant disposé dans les passages successifs d'un échangeur à plaques, la circulation des fluides étant alors organisée de telle sorte que les passages soient alternativement en phase d'adsorption et de désorption.

Une autre solution permettant de diminuer l'amplitude des battements thermiques consiste à ajouter dans le lit d'adsorbant un matériau à changement de phase (MCP), comme décrit par le document US-A-4,971,605. De cette manière, la chaleur d'adsorption et de désorption, ou une partie de cette chaleur, est absorbée sous forme de chaleur latente par le MCP, à la température, ou dans le domaine de températures, du changement de phase du MCP. Il est possible alors d'opérer l'unité PSA dans un mode plus proche de l'isotherme.

En pratique, les matériaux à changement de phase (MCP) agissent comme des puits thermiques à leur température de changement de phase, ou sur leur domaine de températures de changement de phase compris entre une température inférieure et une température supérieure de changement de phase.

Pour pouvoir les manipuler, qu'ils soient à l'état solide ou liquide, les MPC sont en pratique généralement micro encapsulés dans une coquille solide micronique, préférentiellement à base de polymères (mélamine formaldéhyde, acrylique...).

Le document FR 2 936 168 enseigne la fabrication d'un aggloméré sous forme de billes composés de microcapsules d'un matériau à changement de phase (MCP), avec ledit procédé réalisé par un procédé de granulation humide et séchage en lit fluidisé.

Le document EP-A-1565539 décrit différentes manières de placer ces micro capsules à proximité immédiate de l'adsorbant, à savoir un des matériaux à côté, à la surface ou à l'intérieur de l'autre, afin qu'ils puissent jouer leur rôle de stockage/ déstockage des flux de chaleur liés respectivement à l'adsorption et à la désorption.

Toutefois, les solutions décrites dans ce document ne sont pas ou alors que difficilement applicables au plan industriel.

Le document WO 2008/037904 revendique de son côté un procédé de type PSA mettant en oeuvre un lit comprenant des particules d'adsorbant et des particules d'un matériau à changement de phase (MCP) se présentant sous forme d'agglomérats de densité différente de celle de l'adsorbant et respectant des critères de stabilité du mélange :

- le rapport des densités des agglomérats de MCP et des particules d'adsorbants (Rdensité) dans le lit composite est tel que :

$$\text{Rdensité} \leq 5.5 - (2 \cdot \text{Rdiamètre})$$

où :

- Rdensité est le rapport des densités des agglomérats de MCP et des particules d'adsorbant
- Rdiamètre est le rapport des diamètres équivalents des agglomérats de MCP et des particules d'adsorbant et
- les numérateurs et dénominateurs desdits rapports Rdensité et Rdiamètre étant choisis pour avoir : $1 \leq \text{Rdensité} \leq 3,5$ et $1,0 \leq \text{Rdiamètre} \leq 2,25$.

Il est effectivement connu que les mélanges de particules de caractéristiques différentes constituent des états métastables susceptibles d'évoluer de façon complexe lorsque le milieu est soumis à des champs de force, en particulier à des vibrations ou des chocs.

Le document FR 2 891 159 décrit une unité d'adsorption du type PSA comportant un mélange de particules d'adsorbant et des agglomérats d'un MCP, un liant et un matériau à forte conductivité thermique, tel qu'une poudre d'aluminium ou d'argent ; les rapports des densités et diamètres des agglomérats et des particules d'adsorbants étant inférieurs à 1,5 et 2 respectivement pour éviter des problèmes de ségrégation.

Les lits d'adsorbants d'une unité PSA sont soumis à des flux gazeux dont l'intensité et le sens varient d'une étape à l'autre. Ils sont également soumis aux phases transitoires que constituent les ouvertures et fermeture de vannes.

Généralement, au moins un des flux entrant ou sortant d'une unité d'adsorption est issu ou alimente une unité de compression - compresseur ou pompe à vide - qui transmet au fluide des vibrations de fréquence et d'intensité variées. Ces phénomènes créent des mouvements d'ensemble ou des mouvements locaux des particules qui doivent être pris en compte lors du dimensionnement de la géométrie de l'adsorbeur.

On citera par exemple l'utilisation d'une garde d'adsorbant pour compenser le tassement, la détermination des sections minimales pour éviter l'attrition des particules, l'emploi de toiles métalliques pour éviter le mélange d'adsorbants de caractéristiques différentes, ou encore l'utilisation de couches de billes céramiques pour faire appui sur le lit situé en dessous et éviter ainsi les mouvements dus à la circulation du gaz.

L'évolution dans le temps d'un mélange de particules de caractéristiques différentes dépend d'un nombre important de paramètres, à savoir non seulement de la densité et de la forme ou granulométrie, mais aussi notamment de l'état de surface, l'élasticité, la présence de gaz interstitiel, l'humidité... , l'amplitude et la fréquence des vibrations appliquées au milieu...

De ce fait, la prédiction de l'évolution d'un mélange constitué de particules de caractéristiques différentes est, dans la majorité des cas, très difficile, voire impossible à prévoir.

Le document WO 2008/037904 donne des critères de stabilité basés sur des séries de manipulations et mettant en oeuvre la densité et le diamètre des particules.

Il convient de définir ce qu'on entend par les termes « densité » et « diamètre »

Dans le cadre de la présente invention, on appelle « diamètre », le diamètre équivalent de la particule qu'il s'agisse d'adsorbant ou de l'agglomérat de MCP. Le « diamètre équivalent » d'une particule est celui de la sphère ayant la même surface spécifique, la surface spécifique étant la surface rapportée au volume de la particule considérée.

Ainsi, pour un bâtonnet de diamètre d et de longueur 1, on obtient un diamètre équivalent De tel que :

$$De = 6 . 1 . d / (2 . d + 4 . l)$$

Pour une pastille telle que d =1, le diamètre équivalent est le diamètre de la particule.

De façon générale, pour la majorité des géométries de particules utilisées de type cylindrique, on trouve un diamètre équivalent compris entre 0.75 et 1.3 fois le diamètre du cylindre.

Pour une bille sphérique, le diamètre équivalent est directement le diamètre de la bille.

Pour une population de billes essentiellement sphériques mais dont les diamètres présentent une dispersion inhérente au procédé industriel de fabrication, on retient une définition classique : le diamètre équivalent d'une population de billes est le diamètre de billes identiques qui pour le même volume de lit donneraient la même surface totale. En effet, dès lors qu'on a déterminé la distribution en diamètre (c'est-à-dire qu'on a déterminé les différentes fractions Xi de diamètre Di, avec de préférence i supérieur ou égal à 5 pour obtenir une précision suffisante, par exemple par tamisage ou à partir d'appareils de traitement d'images), on obtient le diamètre équivalent par la formule :

$$1 / De = \sum i \ (Xi / Di)$$

Pour les adsorbants concassés, forme sous laquelle on peut en particulier trouver certains charbons actifs, on assimile les particules à des sphères dont on détermine la distribution en diamètre par tamisage, puis on applique la formule de calcul précédente.

A noter que les adsorbants utilisés ont très généralement été tamisés en fin de fabrication par utilisation de deux tamis en série de maille respective m1 et m2 pour éliminer les particules les plus grosses (>m1) et les plus petites (<m2) et que l'essentiel de la population restante, en général 95% poids au minimum, est alors compris entre ces bornes.

Un adsorbant de diamètre moyen 1mm aura par exemple sa population comprise entre 0.7 et 1.3mm ; un adsorbant de diamètre 2mm correspondra à des particules comprises entre 1.6 et 2.4 mm.

On peut trouver des populations plus larges avec des particules comprises entre 2 et 4.6mm par exemple pour un diamètre moyen un peu supérieur à 3 mm.

Notons que sauf stipulation autre, quand on mentionne diamètre d'une population de particules (agglomérats de MCP, adsorbant), on veut signifier « diamètre équivalent moyen ».D'après les exemples précédents, on voit que pour une population de diamètre d, on trouvera généralement des particules de diamètre compris entre 0.66 d et 1.5 d.

En outre, dans le cadre de l'invention, par « densité », on entend densité du lit de particules. Cette densité peut varier de quelques % suivant la méthode de remplissage. De façon générale, la densité utilisée ici correspond à un remplissage dense Lors du remplissage des unités industrielles, on réalise généralement un remplissage de type dense, obtenu en laissant tomber les particules d'adsorbants d'une hauteur suffisante sur un déflecteur afin de générer une « pluie ».

Pour ces raisons et comme l'obtention de la densité tassée (remplissage dense) est mieux définie puisque c'est la densité maximum que l'on peut obtenir, et surtout plus reproductible que la densité de vrac, c'est à la densité tassée que l'on se référera lorsqu'on parle de particules (micro capsules de MCP, agglomérat de MCP, adsorbant) et on la désignera simplement par le terme « densité » dans la présente description.

Cette densité est obtenue en remplissant lentement de particules une éprouvette graduée de sorte que chaque particule puisse en théorie trouver sa meilleure position. En pratique, on réalise une pluie de particules en utilisant en partie supérieure de l'éprouvette un tamis à grosse maille. Différentes techniques peuvent être utilisées donnant des résultats similaires. Toutes les mesures et tests ont été réalisés sur des adsorbants préalablement régénérés, ou des produits séchés c'est-à-dire en pratique avec un taux d'humidité adsorbé inférieur ou égal à 5% poids.

On notera que pour une même campagne de production d'adsorbant ou d'agglomérat, on observe une légère dispersion des densités mesurées à partir de plusieurs échantillons. Pour la majorité des produits, un écart de plus ou moins 3% sur les mesures est classique. On peut définir si nécessaire une densité moyenne à partir de plusieurs mesures.

Par l'expression avoir essentiellement la même densité, on entend que les densités moyennes de l'adsorbant et de l'agglomérat sont à moins de 5%, ce qui signifie aussi que si l'on fait plusieurs mesures pour chaque produit les intervalles de mesure se recoupent probablement.

On devra utiliser parfois le terme de « densité matériau » quand on ne se référera plus à un lit de particules mais à la particule proprement dite ou à la densité d'un matériau, comme le fer, le cuivre, un hydrocarbure solide ou liquide, un polymère...

On pourra noter que le taux de vide entre micro particules constitutives de la particule proprement dite (appelée parfois agglomérat) ou pour les particules constituant un lit est généralement de l'ordre de 0.3 à 0.4. Il est souvent utilisé par la suite un taux de vide de 0.35.

Ainsi, suivant l'enseignement du document WO 2008/037904, on peut connaissant les caractéristiques de l'adsorbant (diamètre, densité) déterminer les caractéristiques que doivent avoir les particules de PCM pour obtenir un mélange stable lors du fonctionnement du PSA. Néanmoins, une telle approche ne répond pas à tous les cas qui se présentent :

En plus de conserver un mélange homogène dans l'adsorbeur en fonctionnement, il faut encore pouvoir réaliser industriellement de façon économique ce mélange, le transporter et remplir l'adsorbeur sans qu'il y ait ségrégation au cours de ces étapes.

La réalisation du mélange peut être effectuée sur place ou à distance. Sur place peut signifier que le mélange est fait préalablement ou juste pendant le remplissage.

Quelque soit le cas, les risques de ségrégation entre adsorbant et PCM sont réels et sont plus élevés durant ces étapes que lorsque l'adsorbeur est rempli.

On a pu observer visuellement des ségrégations se produisant lors des vibrations et chocs dus à un transport routier et à des séparations partielles lors d'un remplissage avec des mélanges pourtant réputé stables lorsqu'ils sont en place dans un adsorbeur. Une solution pourrait consister à faire le mélange au plus près de la surface libre du lit, surface maintenue essentiellement plane et horizontale, mais cela complique énormément les procédures habituelles de remplissage.

Le critère de stabilité préconisé dans le document WO 2008/037904 devient très contraignant dès lors que pour différentes raisons que nous allons voir ensuite plus en détail, le rapport des diamètres PCM / Adsorbant ou Adsorbant/PCM tend vers 2. Il faut alors que le PCM et l'adsorbant ait la même densité.

On peut être conduit à avoir des rapports de diamètre proche de 2 dans un certain nombre de cas :

- Le diamètre des particules de PCM est limité par le transfert thermique ; Le changement de phase doit avoir lieu de façon essentiellement complète durant les phases d'adsorption puis de régénération. Le temps caractéristique est fonction du diamètre de la particule de PCM. Une particule « trop grosse » travaille mal et est inefficace. On peut donc être amener à utiliser des particules de PCM de dimension inférieure à celle de l'adsorbant.

- Si les particules de PCM sont particulièrement conductrices de la chaleur, c'est le transport thermique fluide/surface qui limite l'échange. On peut montrer que là également, il y a intérêt à utiliser des particules de petite taille pour augmenter la surface d'échange.

- La distribution de la taille de l'adsorbant est relativement large et raisonner sur une taille moyenne ne se justifie plus vraiment. C'est le cas avec un certain nombre d'adsorbant classique comme certains gels de silice ou des alumines activées (billes de diamètre compris entre 2 et 5 mm par exemple). C'est généralement le cas également avec les adsorbants concassés. Il est possible d'obtenir du fournisseur d'adsorbant des distributions plus resserrées par tamisage complémentaire mais au prix de surcoût qui peuvent être importants.

- On veut utiliser la même particule de PCM pour mélanger avec deux types d'adsorbants différents (car par exemple de multi lits superposés-, soit dans le même adsorbeur, soit pour des applications différentes.

Dans tous ces cas, on peut être amené à utiliser des agglomérats de MCP de diamètre inférieur au diamètre moyen de l'adsorbant. Dans le cas où la distribution de la taille de l'adsorbant est relativement large, on pourra choisir d'utiliser des agglomérats de MCP de la taille des particules les plus petites. On notera que la distribution de taille des agglomérats de MCP peut être plus resserrée du fait du procédé de fabrication que celle de l'adsorbant. On peut obtenir une population par exemple de 1.9 à 2.1m de diamètre en visant une moyenne de 2mm.

On peut enfin vouloir des mélanges adsorbant/PCM super stables dès lors que la moindre ségrégation peut avoir des effets « catastrophiques ». Supposons un mélange homogène 80% volume adsorbant, 20% PCM. AU cours du fonctionnement, une petite fraction des PCM migre vers la surface supérieure.

Dans le cas d'un adsorbeur cylindrique à axe vertical, cela signifie qu'une petite partie des PCM sera inutile mais l'effet sur les performances sera limité.

Dans le cas d'un adsorbeur radial, cette couche de PCM crée un by-pass entre l'entrée et la sortie, by-pass inacceptable dans la majorité des applications.

Toutes ces raisons conduisent, tout en respectant l'enseignement de WO 2008/037904, à vouloir utiliser des particules de PCM de densité proche de celle de l'adsorbant. Aucune indication n'est fournie dans la littérature quant à la façon d'adapter la densité des particules de MCP à la densité de l'adsorbant. Il est au contraire précisé dans le document cité ci-dessus que ce serait difficile et onéreux.

Dès lors, un problème qui se pose est de fournir des particules de PCM de densité donnée, fixée par l'application et à un coût acceptable... ; autrement dit fournir des particules de PCM de densité voisine de celle du ou des adsorbants du commerce mis en oeuvre dans une unité de production cyclique de gaz de type PSA pour réaliser un mélange stable dans le temps. La solution de l'invention est un mélange d'au moins un aggloméré comprenant un premier matériau à changement de phase (MCP) et un constituant présentant une densité supérieure à 800 kg/m$^3$ et formant le noyau dudit aggloméré, avec ledit constituant composé de fer, cuivre, aluminium, verre, roche concassée ou quartz, de densité globale D2, et de particules d'adsorbant de densité D1, caractérisé en ce que la densité globale D2 dudit aggloméré est telle que : $0{,}67D1 \leq D2 \leq 1{,}5\,D1$, et les particules d'absorbant ont un diamètre d1 et le diamètre d2 dudit aggloméré est tel que $0{,}5\,d1 < d2 < 0{,}8\,d1$. L'aggloméré selon l'invention peut être réalisé par un procédé par granulation humide et séchage en lit fluidisé.

Plus précisément, dans un procédé de granulation humide et séchage en lit fluidisé, appliqué à la fabrication d'agglomérés destinés à être utilisés dans les procédés thermo cycliques, une suspension (mélange essentiellement homogène de particules solides dans un milieu liquide) contenant au minimum une solution aqueuse, les microparticules de PCM et dans le cas présent un constituant présentant une densité supérieure à 800 kg/m$^3$, est injectée, de manière préférentielle par pulvérisation, dans un réacteur parcouru par un flux de gaz chaud. Ce flux de gaz est essentiellement dirigé de bas en haut dans le dit réacteur de façon à maintenir en suspension les particules formées. Pour cette application, ce gaz sera préférentiellement de l'air atmosphérique, éventuellement partiellement séché par un moyen adéquat. La pression dans le réacteur est proche de la pression atmosphérique. Elle peut être légèrement en dessous de cette dernière lorsque le gaz est extrait mécaniquement du réacteur (extracteur de type ventilateur par exemple maintenant une dépression de quelques dizaines de millibar maximum). Au cours du temps, la suspension injectée enrobe de façon homogène les particules en mouvement leur donnant une forme essentiellement sphérique. Ce procédé est également appelé « spray coating » et on utilise le terme de « lit fluidisé » pour décrire le fonctionnement du réacteur.

Les paramètres opératoires (débits d'injection, débit d'air, pression, température) sont à adapter en fonction du type de granulateur utilisé selon les règles de l'art mais il est à noter que d'une façon générale ces conditions opératoires sont particulièrement adaptées à la nature des MCP avec des pressions maximales de quelques bars seulement à l'amont des buses d'injection (comprise généralement entre 1 et 10 bar abs) et des températures modérées (qui peuvent rester inférieures à 100°C). On reste très largement en deçà des pressions de pastillage, d'extrusion (plusieurs dizaines de bars) ou d'activation des mélanges adsorbant/MCP.

Pour fabriquer l'aggloméré selon l'invention, d'autres procédés sont envisageables comme le pastillage qui met en oeuvre essentiellement des effets de pression, l'extrusion qui utilise une filière pour former des bâtonnets ....

Dès lors, on appelle aggloméré tout aggloméré contenant des MCP quelque soit le procédé de fabrication.

Selon le cas, le mélange selon l'invention peut présenter une ou plusieurs des caractéristiques suivantes :

- ledit constituant présente une densité supérieure à 1000 kg/m$^3$ ;
- le matériau à changement de phase est choisi parmi les paraffines, les acides gras, les composés azotés, les composés oxygénés, les phényles et les sels hydratés ou un mélange de ces composés ;
- ledit aggloméré comprend un liant. De préférence le liant représente moins de 30% en volume dudit aggloméré et sera choisi parmi des argiles, des liants hydrauliques, des polymères, des colles, des résines. Le liant est un additif qui joue le rôle de colle ou de ciment pour assurer la cohérence de l'aggloméré. C'est lui qui en grande partie est responsable de la résistance de la bille ;
- la densité globale D2 dudit aggloméré est telle que : $0{,}80D1 \leq D2 \leq 1{,}25\,D1$, de préférence $0{,}9D1 \leq D2 \leq 1{,}1D1$ ;
- les particules d'adsorbant et les agglomérés ont essentiellement la même densité ;
- les particules d'adsorbant ont un diamètre d1 et le diamètre d2 dudit aggloméré est tel que $0{,}5d1 \leq d2 \leq 2d1$, de préférence $0{,}5d1 \leq d2 \leq 0{,}8d1$ ; comme mentionné précédemment il s'agit là encore de diamètre équivalent moyen ;
- le diamètre de l'aggloméré et le diamètre des particules d'adsorbant sont essentiellement identiques ;
- la concentration en volume des agglomérés est comprise entre 3 et 30%, préférentiellement entre 5 et 20% ;
- l'adsorbant est du charbon actif et les particules d'aggloméré ont une densité comprise entre 550 et 900 kg/m$^3$ ;
- l'adsorbant est une alumine activée et les particules d'aggloméré ont une densité comprise entre 550 et 900 kg/m$^3$ ;
- l'adsorbant est du gel de silice et les particules d'aggloméré ont une densité comprise entre 450 et 800 kg/m$^3$ ;
- l'adsorbant est de la zéolite et les particules d'aggloméré ont une densité comprise entre 500 et 800 kg/m$^3$ ;
- l'adsorbant est du MOF et les particules d'aggloméré ont une densité comprise entre 400 et 800 kg/m$^3$.

Les MCP peuvent être organiques, tels que les paraffines, les acides gras, les composés azotés, les composés oxygénés (alcool ou acides), les phényles et les silicones, ou inorganiques, tels que les sels hydratés et les alliages métalliques. On appellera MCP l'un de ces composés à l'état pur ou tout mélange contenant l'un de ces composés (comme par exemple les eutectiques).

La capacité d'absorption de chaleur d'un MCP est d'autant plus grande que sa chaleur latente est élevée. Généralement, les MCP sont exploités pour leur changement de phase solide-liquide.

Pour pouvoir les manipuler, qu'ils soient à l'état solide ou liquide, les MCP sont en pratique généralement micro encapsulés dans une coquille solide micronique, préférentiellement à base de polymères (mélamine formaldéhyde, acrylique...).

Les paraffines en particulier étant relativement faciles à micro encapsuler, elles sont généralement des MCP de choix par rapport aux sels hydratés, même si les paraffines ont une chaleur latente généralement inférieure à celles des sels hydratés.

De plus, les paraffines présentent d'autres avantages comme la réversibilité du changement de phase, la stabilité chimique, la température définie de changement de phase ou les températures inférieures et supérieures définies de changement de phase (c'est-à-dire qu'il n'y a pas d'effet d'hystérésis), un faible coût, la toxicité limitée et le large choix de températures de changement de phase selon le nombre d'atomes de carbone et la structure de la molécule.

Les MCP paraffiniques micro encapsulées se présentent sous la forme d'une poudre, chaque microcapsule constituant cette poudre faisant entre 50 nm et 100 $\mu$m de diamètre, préférentiellement entre 0,2 et 50 $\mu$m de diamètre. Chaque micro capsule a une conductivité thermique de l'ordre de 0,1 à 0,2 W/m/K, selon que la paraffine est à l'état solide ou liquide à l'intérieur de la microcapsule.

Les MCP micro encapsulés, disponibles sous forme de poudre, ne peuvent pas être introduits tels quels dans un lit d'adsorbant car ils seraient entraînés par les flux de gaz circulant dans l'adsorbeur.

La présente invention a également pour objet une unité d'adsorption comprenant un lit fixe ou un lit mobile dans lequel est mis en oeuvre un mélange selon l'invention.

Selon le cas, l'unité d'adsorption peut présenter une ou plusieurs des caractéristiques suivantes :

- l'unité d'adsorption comprend un lit fixe et la proportion d'aggloméré est sensiblement constante dans tout le volume du lit ; par « sensiblement constante » on entend une variation de la proportion d'aggloméré inférieure à 15%, de préférence inférieure à 10%, et encore plus préférentiellement inférieure à 5%;
- l'unité d'adsorption comprend un lit fixe et la proportion d'aggloméré varie au sein du lit ;
- ladite unité est un PSA H2, un PSA CO2, un PSA 02 ou un PSA N2.

Notons que si l'unité d'adsorption comprend un lit fixe, ce lit peut comprendre une ou plusieurs couches.

L'invention concerne donc la majorité des procédés PSA et plus particulièrement de façon non limitative, outre les PSA H2, 02, N2, CO et CO2, les PSA de fractionnement du syngas en deux fractions au moins, les PSA sur gaz naturel destinés à retirer l'azote, et les PSA servant à fractionner des mélanges d'hydrocarbures.

Généralement le matériau adsorbant est placé en lit fixe dans des réacteurs que l'on appelle communément « adsorbeurs » mais il existe également des procédés où l'adsorbant est en mouvement (lit mobile). L'invention peut s'appliquer à tous ces types d'application. On notera toutefois qu'à priori un lit mobile nécessite forcément d'avoir des particules d'adsorbant et de MCP de caractéristiques (densité, diamètre) pratiquement identiques sous peine de voir les particules se « séparer » lors des mouvements du mélange.

La proportion de MCP agglomérés à ajouter à l'adsorbant peut varier selon le PSA considéré, par exemple plus importante (30%) dans une zone de forte adsorption et plus faible, voire nulle dans une zone où il s'agira d'adsorber des traces de constituants.
Un mélange homogène dans une couche donnée peut être souhaitable mais des hétérogénéités locales n'auront pas d'impact important sur le résultat global, du fait en particulier du mélange constant des veines de fluide dans un milieu particulaire.

Dans le cas le plus habituel de lit fixe, on notera qu'il n'est pas nécessaire d'avoir une répartition homogène du MCP sur tout le volume du lit d'adsorbant. Par exemple, pour un procédé PSA 02, il est plus intéressant de placer les agglomérats de MCP plutôt dans la première moitié du lit de zéolite.

Plus généralement, dans un procédé PSA multi-lits, les agglomérats de MCP peuvent n'être introduits que dans un seul de ces lits, ou dans une partie seulement d'un de ces lits, ou dans certaines parties seulement de plusieurs de ces lits.

De plus, dans une zone donnée, la répartition de l'aggloméré de MCP n'est pas exactement homogène mais peut suivre un certain écart-type.

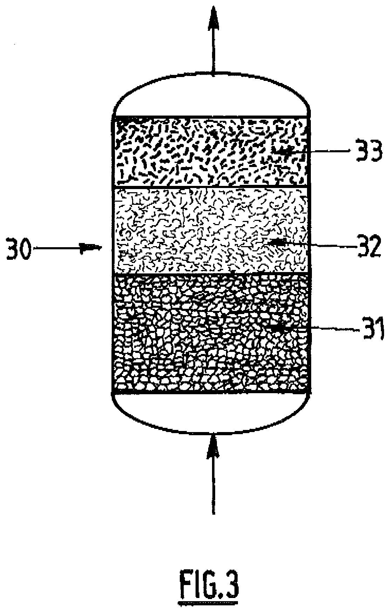

Sur la figure 3 est représenté un adsorbeur 30 d'une unité PSA comprenant plusieurs lits 31, 32 et 33 successifs d'adsorption.

Le premier lit 31 est un lit d'adsorption composite selon l'invention contenant des agglomérats de MCP mélangés à des particules d'adsorbant par exemple du charbon actif, de la zéolite, du gel de silice ou de l'alumine activée.

Le deuxième lit 32 est un lit d'adsorption composite selon l'invention contenant des agglomérats de MCP mélangés à des particules d'adsorbant par exemple du charbon actif, de la zéolite, du gel de silice ou de l'alumine activée. La proportion de MCP dans les lits 31 et 32 n'est pas la même.

Le troisième lit 33 est un lit d'adsorbant sans agglomérats de MCP.

Le gaz G traverse successivement le premier lit 31 puis le deuxième lit 32 puis le troisième lit 33 pendant l'étape d'adsorption.

Les exemples suivants sont des exemples d'applications des lits composites à base de MCP dans des procédés PSA industriels

Le procédé PSA $H_2$ permet de purifier l'hydrogène d'un mélange gazeux contenant, en plus de $H_2$, au moins une molécule parmi CO, $CO_2$, $CH_4$, $N_2$, $H_2O$ et des hydrocarbures.

Ce mélange gazeux peut par exemple provenir d'au moins une source parmi les sources suivantes : un réformeur à la vapeur ou auto thermal par exemple, un réacteur d'oxydation partielle, un réacteur de type Fischer-Tropsch, une ligne de gaz naturel, toute ligne d'un réseau de gaz d'une installation pétrochimique ou d'une raffinerie.

Le PSA 02 permet de produire, en sortie d'adsorbeur, de l'oxygène à une pureté comprise entre 70 et 99% en volume, préférentiellement entre 80 et 95%, par adsorption sélective de l'azote présent dans l'air.

Simultanément, un PSA 02 est capable également de produire de l'air enrichi en azote en entrée d'adsorbeur, lors des étapes de régénération. Les PSA 02 sont utilisés par exemple :

- dans le milieu médical pour la production d'air respirable enrichi ou appauvri en oxygène, comme décrit par exemple dans WO-A-2003/090903, WO-A-2005/028059, US-A-5906672 ou US-A-6793719. Dans le cas de PSA 02 médicaux délivrant de l'air enrichi en oxygène, les débits d'oxygène délivrés par unité sont typiquement compris entre 0,5 et 300 Nl/min. Certains de ces PSA peuvent être portables comme décrit par exemple dans WO-A-2003/064009, WO-A-2004/054493, EP-A-1307278 ou WO-A-02/09848.
- dans le domaine de l'aéronautique, comme PSA 02 embarqués, pour délivrer de l'air enrichi en oxygène à bord d'un appareil en vol. Ces PSA sont souvent appelés OBOGS (On Board Oxygen Generator Systems). De tels systèmes sont décrits par exemple dans WO-A-02/04076, EP-A-1400275 ou EP-A-1374972.

Dans ces deux premières applications, il pourra s'agir de RPSA nécessitant également des agglomérats de MCP à conductibilité thermique améliorée.

- dans l'industrie, par exemple dans la métallurgie, l'industrie du verre, la pisciculture ou le traitement des eaux.

Une unité PSA O2 contient usuellement plusieurs adsorbeurs, typiquement entre 1 et 3 adsorbeurs, et peut produire de 0,03 Nm3/h (par exemple les PSA 02 médicaux) à 10000 Nm$^3$/h d'$O_2$.

Le PSA CO2 permet de produire un gaz décarbonaté d'une part et un gaz enrichi en CO2 d'autre part à partir d'un gaz d'alimentation contenant du CO2. Le gaz décarbonaté contient entre 0,1 et 15% de CO2 résiduel, préférentiellement entre 1 et 8% de CO2 résiduel. Le gaz enrichi en CO2 contient entre 10 et 99% de CO2 (JP-A-2003-001061), préférentiellement entre 50 et 96% de CO2. Dans un procédé PSA CO2, le CO2 est adsorbé et récupéré lors de l'étape de régénération et le gaz décarbonaté, non adsorbé, est récupéré en sortie d'adsorbeur pendant l'étape d'adsorption. Il existe, dans l'état de l'art, des PSA CO2 rotatifs (US-A-6,500,236) pour lesquels l'invention peut également être appliquée. Les PSA CO2 peuvent être utilisés pour traiter des gaz contenant entre 400 ppm et 80% de CO2, préférentiellement entre 5% et 50% de CO2, et peuvent être appliqués par exemple dans l'industrie métallurgique, par exemple pour la décarbonatation de gaz issus de DRI, de Corex, de Midrex, de HYL, ou de haut-fourneaux (US-A-6,562,103, US-A-5,582,029, US-A-5,858,057, US-A-5,676,732), dans l'industrie du papier, dans l'industrie de la chaux, dans l'industrie cimentière, dans les centrales électriques (JP 2003-001061), dans les IGCC (EP-A-1142623, US-A-5,582,029), dans le traitement du gaz naturel ou du bio gaz naturel, ou pour décarbonater un milieu confiné, par exemple dans les sous-marins ou en plongée.. Le temps de cycle d'un procédé PSA CO2 est compris entre 1 minute et 30 minutes, préférentiellement entre 2 minutes et 20 minutes.

Le PSA N2 permet de produire de l'azote à une pureté comprise entre 70 et 99.9%, préférentiellement entre 80 et 98%, en adsorbant préférentiellement l'oxygène présent dans l'air. Les PSA N2 utilisent généralement un tamis moléculaire carboné. Il existe aussi des PSA permettant de co-produire de l'oxygène et de l'azote : cf. WO-A-2004054493 et WO-A-2003086586.

Le PSA sécheur est destiné à retenir au moins une partie de l'humidité d'un gaz, généralement de l'air. L'adsorption d'eau conduisant à un dégagement important de chaleur (et inversement durant la désorption) l'ajout de MCP permet d'améliorer les performances. De telles unités peuvent servir conjointement à enlever tout ou partie du CO2 et des impuretés dites secondaires de l'air (oxydes d'azote, hydrocarbures....)

L'invention peut être mise en oeuvre, en outre, dans un procédé :

- PSA Argon tel que décrit notamment dans US-A-6,544,318, US-A-6,432,170, US-A-5,395,427 ou US-A-6,527,831. Le PSA Ar permet de produire de l'oxygène à une pureté supérieure à 93%, en adsorbant préférentiellement soit l'argon, soit l'oxygène, présent dans un flux riche en 02 issu par exemple d'un PSA 02. Les PSA Ar utilisent généralement un tamis moléculaire carboné ou une zéolite échangée à l'argent (US-A-6,432,170).

- PSA He qui permet de produire de l'hélium en adsorbant préférentiellement les autres molécules présentes dans le flux d'alimentation.

- tout PSA permettant la séparation entre un alcène et un alcane, typiquement les PSA éthylène/éthane ou propylène/propane, par exemple. Ces séparations reposent sur une différence de cinétique d'adsorption des molécules sur un tamis moléculaire, carboné ou non.

- tout PSA permettant de fractionner un gaz de synthèse (syngas).

- tout PSA permettant de séparer $CH_4$ de $N_2$.

L'invention va à présent être illustrée à l'aide d'exemples.

La densité de la « poudre » de MCP utilisée dans les tests ci-après est d'environ 300 à 500 kg/m³. Avec un taux de vide de l'ordre de 30 à 40%, la densité matériau est dans la fourchette 450 à 850 kg/m³.

Notons que la présence d'un petit pourcentage de liant modifie peu la densité de l'agglomérat.

La densité des principaux adsorbants va d'environ 400 pour le charbon actif à environ 900 kg/m³ pour l'alumine activée.

De façon générale, l'agglomérat de PCM est par nature plutôt plus léger que les particules d'adsorbants. On a donc étudié selon l'invention la possibilité d'adjoindre un constituant présentant une densité supérieure à 800 kg/m³ dans le processus de fabrication des aggloмérats de MCP afin de se rapprocher de la densité des adsorbants utilisés. Une deuxième contrainte est de former des aggloмérats de MCP de dimension voisine du diamètre moyen de l'adsorbant (contrainte de "super-stabilité) ou de diamètre de l'ordre de la moitié du diamètre de l'adsorbant (contrainte de transfert thermique).

Un certain nombre de produits ont été sélectionnés en fonction de leur densité matériau et de leur caractéristiques: le graphite (environ 2000 kg/m³), l'aluminium (2700), le fer (7800), le cuivre (9000), le verre (2300), le quartz -grain de quelques centaines de microns (2500) ou sable micronique- (1650 en lit), ((le polyuréthane))

Parmi les caractéristiques intéressantes, on a retenu une grande conductibilité thermique, la géométrie finale de l'aggloмérat, le ferromagnétisme et/ou un coût peu élevé.

De façon générale, afin que le pourcentage volume des MCP reste prépondérant, on utilisera un matériau dont la « densité matériau » (s'il est utilisé sous forme de grain, de fibres), ou la densité en lit (s'il s'agit d'une poudre) est sensiblement supérieure à la densité des MCP.

En pratique, tous les aggloмérats composites fabriqués l'ont été avec un matériau lourd de densité ou « densité matériau » supérieure à 1000 kg/m³.

On peut ainsi déterminer, en se basant par exemple sur une valeur moyenne de la densité MCP/liant de 350kg/m³, le pourcentage volume du constituant lourd à introduire dans la particule et ce suivant qu'il se présente sous forme de poudre dispersée parmi les PCM ou de façon plus ponctuelle comme dans le cas d'un noyau central ou d'une enveloppe externe.

Exemple 1 :

On cherche à réaliser des aggloмérats selon l'invention destinés à former un mélange avec du charbon actif de densité 450 kg/m³ et donc de densité voisine également de 450 kg/m³.

3 types d'aggloмérats sont fabriqués.

Dans le premier cas, on a un noyau de fer de densité matériau 7800kg/m³: on peut déterminer que le volume nécessaire du noyau métallique représente 1.3% du volume de la particule.

Pour une particule de diamètre 2mm, cela correspond à un noyau de fer d'environ 475 microns de diamètre.

Dans le deuxième cas, on a une poussière de fer de densité 5000 kg/m³ : le volume nécessaire est de l'ordre de 2.0%.

Dans le troisième cas, on a une métallisation extérieure de densité matériau d'environ 7800kg/m³ :

Pour une particule de diamètre 2mm, cela correspond à une métallisation de quelques microns d'épaisseur (4 à 5).

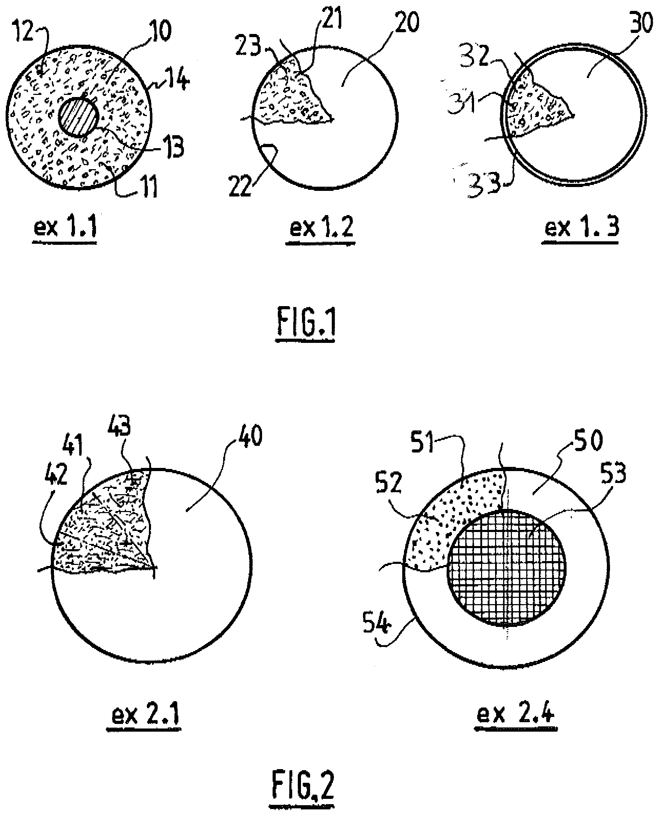

Les Figures 1.1, 1.2 et 1.3 représentent ces 3 cas d'aggloмérats 10, 20 et 30.

Les éléments 11, 21,31 et 12, 22,32 correspondent respectivement aux micro capsules de MCP et au liant qui assure la cohésion. Sur la figure 1.1, l'élément 13 représente le noyau de fer sur lequel a été déposé le mélange MCP/liant et l'élément 14 l'enveloppe éventuelle qui va améliorer si nécessaire les caractéristiques mécaniques de l'aggloмérat (résistance à l'écrasement, attrition...).

Sur la figure 1.2, l'élément 23 correspond à la poussière de fer. Cette poussière métallique a été rajoutée au mélange liquide MCP, liant et le tout est injecté dans le réacteur en lit fluidisé dans lequel se forment les particules.

Sur la figure 1.3, l'élément 33 représente l'enveloppe métallisée de l'aggloмérat. Le matériau constitutif de l'enveloppe est rajouté lorsque les particules de MCP ont atteint la taille désirée. Avantageusement, cette étape peut se dérouler dans le même réacteur que celui permettant de former les aggloмérats.

Le procédé d'aggloмération en lit fluidisé auquel il est fait mention ci-dessus permet de fabriquer ces différents types d'aggloмérat. La solution 1.1 présente un certain nombre d'avantages : la présence d'un noyau de fer accélère la formation des billes de MCP car il se comporte comme un nucleus sur lequel vient se déposer la solution de MCP et de liant. Il y a un gain de temps et donc un coût de fabrication moindre. La dispersion de granulométrie des billes est réduite dès lors que la grenaille métallique est bien calibrée. Au niveau des performances thermiques, le fait que le centre ne renferme pas de MCP accélère la cinétique. La perte en volume de MCP est négligeable.

Exemple 2 :

Il s'agit de déterminer un PCM composite de 1mm de diamètre destiné à être mélangé avec un adsorbant de diamètre 2 mm, de densité 650 kg/m$^3$ et ce dans un cycle PSA rapide. (RPSA). On veut donc favoriser la cinétique thermique en augmentant la surface d'échange des agglomérats à % volume donné de MCP.

Pour cela, on utilise, dans le premier cas, des micro fibres de graphite : on intègre 18% volume de graphite dans l'agglomérat de MCP, ce qui effectivement, dû à la grande conductivité des fibres graphite, améliore aussi la cinétique thermique de la particule.

Dans le deuxième cas, on utilise comme constituant de l'agglomérat du cuivre : obtenir la même densité que l'adsorbant conduit à utiliser dans ce cas 3.5% volume de cuivre soit un noyau de 330 microns. Comme dans l'exemple 1 premier cas, le gain sur la cinétique provient du fait que les MCP sont essentiellement à la périphérie seulement (transfert thermique plus rapide).

Dans le troisième cas, on réalise un agglomérat selon l'invention, en utilisant un noyau de fer poreux de densité matériau 3900 kg/m3 qui va occuper environ 8,5% du volume, soit un noyau de diamètre 440 microns. Dans ce cas, les MCP n'occupent réellement que la périphérie pour une perte en volume de moins de 10%.

Dans le quatrième cas, on réalise un agglomérat selon l'invention, en utilisant par exemple un noyau de quartz. Le diamètre moyen du noyau est alors un peu supérieur à la moitié du diamètre de la particule fabriquée.

La figure 2 illustre le premier et le quatrième cas. Sur cette figure les éléments 40 et 50, correspondent aux agglomérats, les éléments 41 et 51 aux micro particules de MCP et les éléments 42 et 52 au liant. L'élément 43 représente les fibres de carbone, l'élément 53 le noyau de quartz et l'élément 54 une enveloppe extérieure.

Le troisième cas a été jugé particulièrement intéressant à cause du faible coût de fabrication et des propriétés de l'agglomérat (capacité thermique, cinétique, ferromagnétisme...).

On notera qu'il existe des micro particules de MCP de densité plus élevée (densité matériau de 1000 kg/m 3 par exemple) que celle prise en compte jusqu'à présent. Il peut s'agir par exemple de sels hydratés (au lieu d'hydrocarbures). On peut donc être amené à utiliser un constituant de densité plus faible pour atteindre un objectif de densité. Utiliser un liant conduisant à un taux de vide élevé est une possibilité mais qui risque d'entraîner des performances thermiques assez faibles (peu de particules de MCP, mauvaise conductibilité). On utilisera préférentiellement un noyau de faible densité, très poreux par exemple.

On notera également que certaines particules de MCP étant de densité élevée, on peut les utiliser en mélange avec des particules de MCP plus légères pour obtenir la densité visée.

On comprend donc que l'on peut obtenir, à partir de MCP peu coûteux car produit en grande quantité et d'au moins un autre matériau de densité plus élevée, des agglomérats de caractéristiques physiques choisies directement mélangeables aux particules d'adsorbants et permettant d'améliorer la thermique des unités PSA.

**Revendications**

1. Mélange d'au moins un agglomérat comprenant un premier matériau à changement de phase (MCP) et un constituant présentant une densité supérieure à 800 kg/m$^3$ et formant le noyau dudit agglomérat, avec ledit constituant composé de fer, cuivre, aluminium, verre, roche concassée ou quartz, de densité globale D2, et de particules d'adsorbant de densité D1, **caractérisé en ce que** la densité globale D2 dudit agglomérat est telle que : 0,80D1 ≤ D2 ≤ 1,25 D1, et les particules d'absorbant ont un diamètre d1 et le diamètre d2 dudit agglomérat est tel que 0,5 d1 < d2 ≤ 0,8 d1.

2. Mélange selon la revendication 1, **caractérisé en ce que** ledit constituant présente une densité supérieure à 1000 kg/m$^3$.

3. Mélange selon l'une des revendications 1 ou 2, **caractérisé en ce que** le matériau à changement de phase est choisi parmi les paraffines, les acides gras, les composés azotés, les composés oxygénés, les phényles et les sels hydratés ou un mélange de ces composés.

4. Mélange selon l'une des revendications 1 à 3, **caractérisé en ce que** ledit agglomérat comprend un liant.

5. Mélange selon l'une des revendications 1 à 4, **caractérisé en ce que** la densité globale D2 dudit agglomérat est telle que : 0,9D1 ≤ D2 ≤ 1,1 D1.

6. Unité d'adsorption comprenant un lit fixe ou un lit mobile dans lequel est mis en oeuvre un mélange selon l'une des revendications 1 à 5.

7. Unité d'adsorption selon la revendication 6, **caractérisé en ce que** l'unité d'adsorption comprend un lit fixe et la proportion d'agglomérat est sensiblement constante dans tout le volume du lit.

8. Unité d'adsorption selon la revendication 6, **carac-**

**térisé en ce que** l'unité d'adsorption comprend un lit fixe et la proportion d'agglomérat varie au sein du lit.

9. Unité d'adsorption selon l'une des revendications 6 à 8, **caractérisé en ce que** ladite unité est un PSA H2, un PSA CO2, un PSA 02 ou un PSA N2.

**Patentansprüche**

1. Gemisch aus mindestens einem Agglomerat, das einen ersten Werkstoff mit Phasenwechsel (MCP) umfasst und einen Bestandteil, der eine Dichte größer als 800 kg/m$^3$ aufweist und den Kern des Agglomerats bildet, mit dem Bestandteil bestehend aus Eisen, Kupfer, Aluminium, Glas, Schotter oder Quarz, mit globaler Dichte D2 und Adsorptionsmittelpartikeln mit Dichte D1, **dadurch gekennzeichnet, dass** die globale Dichte D2 des Agglomerats derart ist, dass: $0{,}80 \, D1 \leq D2 \leq 1{,}25 \, D1$, und dass die Adsorptionsmittelpartikel einen Durchmesser d1 haben und der Durchmesser d2 des Agglomerats derart ist, dass $0{,}5 \, d1 \leq d2 \leq 0{,}8 \, d1$.

2. Gemisch nach Anspruch 1, **dadurch gekennzeichnet, dass** der Bestandteil eine Dichte größer als 1000 kg/m$^3$ aufweist.

3. Gemisch nach einem der Ansprüche 1 oder 2, **dadurch gekennzeichnet, dass** der Werkstoff mit Phasenwechsel aus den Paraffinen, Fettsäuren, stickstoffhaltigen Verbindungen, sauerstoffhaltigen Verbindungen, Phenylen und hydratisierten Salzen oder einem Gemisch dieser Verbindungen ausgewählt ist.

4. Gemisch nach einem der Ansprüche 1 bis 3, **dadurch gekennzeichnet, dass** das Agglomerat ein Bindemittel umfasst.

5. Gemisch nach einem der Ansprüche 1 bis 4, **dadurch gekennzeichnet, dass** die globale Dichte D2 des Agglomerats derart ist, dass: $0{,}9 \, D1 \leq D2 \leq 1{,}1 \, D1$.

6. Adsorptionseinheit, die ein Festbett oder ein Flüssigbett umfasst, in dem ein Gemisch nach einem der Ansprüche 1 bis 5 umgesetzt wird.

7. Adsorptionseinheit nach Anspruch 6, **dadurch gekennzeichnet, dass** die Adsorptionseinheit ein Festbett umfasst, und dass der Agglomeratanteil im Wesentlichen in dem gesamten Volumen des Betts konstant ist.

8. Adsorptionseinheit nach Anspruch 6, **dadurch gekennzeichnet, dass** die Adsorptionseinheit ein Festbett umfasst, und dass der Agglomeratanteil innerhalb des Betts variiert.

9. Adsorptionseinheit nach einem der Ansprüche 6 bis 8, **dadurch gekennzeichnet, dass** die Einheit ein PSA H2, ein PSA CO2, ein PSA 02 oder ein PSA N2 ist.

**Claims**

1. Mixture of at least one agglomerate comprising a first phase change material (PCM) and a constituent having a density greater than 800 kg/m$^3$ and forming the core of said agglomerate, where said constituent is composed of iron, copper, aluminium, glass, crushed rock or quartz, of overall density D2, and of adsorbent particles of density D1, **characterised in that** the overall density D2 of said agglomerate is such that: $0.80 \, D1 \leq D2 \leq 1.25 \, D1$, and the adsorbent particles have a diameter d1 and the diameter d2 of said agglomerate is such that $0.5 \, d1 \leq d2 \leq 0.8 \, d1$.

2. Mixture according to claim 1, **characterised in that** said constituent has a density greater than 1000 kg/m$^3$.

3. Mixture according to one of claims 1 or 2, **characterised in that** the phase change material is chosen from among paraffins, fatty acids, nitrogenous compounds, oxygenated compounds, phenyls and hydrated salts or a mixture of these compounds.

4. Mixture according to one of claims 1 to 3, **characterised in that** said agglomerate comprises a binder.

5. Mixture according to one of claims 1 to 4, **characterised in that** the overall density D2 of said agglomerate is such that: $0.9 \, D1 \leq D2 \leq 1.1 \, D1$.

6. Adsorption unit comprising a fixed bed or a moving bed wherein a mixture according to one of claims 1 to 5 is used.

7. Adsorption unit according to claim 6, **characterised in that** the adsorption unit comprises a fixed bed and the proportion of agglomerate is substantially constant throughout the bed volume.

8. Adsorption unit according to claim 6, **characterised in that** the adsorption unit comprises a fixed bed and the proportion of agglomerate varies within the bed.

9. Adsorption unit according to one of claims 6 to 8, **characterised in that** said unit is an H2 PSA, a CO2 PSA, an 02 PSA or an N2 PSA.

ex 1.1

ex 1.2

ex 1.3

FIG.1

ex 2.1

ex 2.4

FIG.2

FIG.3

**RÉFÉRENCES CITÉES DANS LA DESCRIPTION**

**Documents brevets cités dans la description**

- EP 1188470 A
- US 4971605 A
- FR 2936168
- EP 1565539 A
- WO 2008037904 A
- FR 2891159
- WO 2003090903 A
- WO 2005028059 A
- US 5906672 A
- US 6793719 A
- WO 2003064009 A
- WO 2004054493 A
- EP 1307278 A
- WO 0209848 A
- WO 0204076 A
- EP 1400275 A
- EP 1374972 A
- JP 2003001061 A
- US 6500236 A
- US 6562103 A
- US 5582029 A
- US 5858057 A
- US 5676732 A
- EP 1142623 A
- WO 2003086586 A
- US 6544318 A
- US 6432170 A
- US 5395427 A
- US 6527831 A